Europäisches Patentamt

European Patent Office

Office européen des brevets

(19)

(11) **EP 1 320 086 A1**

(12) **EUROPEAN PATENT APPLICATION**

(43) Date of publication:
**18.06.2003 Bulletin 2003/25**

(51) Int Cl.[7]: **G10L 15/18**, G10L 15/26

(21) Application number: **01129721.5**

(22) Date of filing: **13.12.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Sony International (Europe) GmbH 10785 Berlin (DE)**

(72) Inventor: **Lam, Yin Hay,
Adv. Technoly Center Stuttgart
70327 Stuttgart (DE)**

(74) Representative: **Müller - Hoffmann & Partner
Patentanwälte,
Innere Wiener Strasse 17
81667 München (DE)**

(54) **Method for generating and/or adapting language models**

(57)     To increase the recognition capabilities with respect to continuously spoken speech it is suggested to employ a training corpus (TC) to generate a priori probabilities of spoken word sequences. To fit the training corpus (TC) and/or the generated language model (LM) to the field of continuously spoken speech purpose information (PI) in particular describing the vocabulary of the continuously spoken speech recognition purpose is used to adapt the training corpus (TC) and/or the language model (LM) to overcome out-of-vocabulary problems.

ILM

$$h = I - want - to$$

I
want
to
reserve   dance   buy   fly   eat
w1   w2   w3   w4   w5
P(w1|h) P(w2|h) P(w3|h) P(w4|h) P(w5|h)

$$P(w_i \mid I - want - to) = \frac{COUNT(I - want - to - w_i)}{\sum_{k=1}^{k=N} COUNT(I - want - to - w_k)}$$

ALM

I
want
to
reserve   buy   fly
w1   w3   w4
P(w1|h)   P(w3|h)   P(w4|h)

$$P(w_i \mid I - want - to) = \frac{COUNT(I - want - to - w_i)}{\sum_{k=1}^{k=M} COUNT(I - want - to - w_k)}$$

Fig. 2

EP 1 320 086 A1

**Description**

The present invention relates to a method for generating and/or adapting language models for continuously spoken speech recognition purposes, in particular wherein a vocabulary based language model adaptation is performed using word n-gram pruning.

In the field of recognition of continuously spoken speech language models are provided in the employed recognition systems. These language models provide a priori estimations of the probabilities of spoken word sequences so as to improve the recognition accuracy.

In advance of the application of the recognition system word sequence probabilities are determined on the basis of large amounts of available texts. Based on the evaluation of these texts and on the analysis of the text structures said word sequence probabilities are computed.

A major drawback is that most of the amount of available texts is designed as written speech. There exist several reasons upon which it can be doubted that said written speech is appropriate to describe continuously spoken speech.

If, on the other hand, domain specific language models are designed employing specific texts obtainable recognition rates are also not satisfying, as the amount of these specific texts is very small compared to usually involved text bases.

It is an object of the present invention to provide a method for generating and/ or for adapting language models for continuously spoken speech recognition purposes in which generally designed texts can be employed to generate, train and/or adapt language models in a reliable manner.

The object is independently achieved by methods for generating and/or adapting language models with the features of claims 1 and 3. Preferred embodiments of the inventive method for generating and/or for adapting language models are within the scope of the dependent subclaims. Additionally, the object is achieved by a method for recognizing speech according to claim 11, a system for generating and/or adapting language models and/or for recognizing speech according to claim 12, and by a computer program product according to claim 13.

In the method for generating and/or adapting language models for a continuously spoken speech recognition purposes according to the present invention purpose information is generated and/or provided which describes characteristics, vocabulary, and/or the like of the given continuously spoken speech recognition purpose. Further, a training corpus is provided in the form of an amount of text. Additionally a language model is generated and/or provided for said continuously spoken speech recognition purpose which is based on and employing said training corpus and/or a derivative thereof and thereby a priori information and/or probabilities with respect to spoken word sequences is generated and/or included.

According to a first solution of the object said step of providing a training corpus comprises a first step of providing an initial training corpus and a second step of adapting said initial training corpus with respect to and/or employing said purpose information, thereby generating an adapted training corpus to be used as said training corpus.

According to a second solution with respect to the object the step of generating said language model comprises a first step of generating an initial language model based on said training corpus or a derivative thereof and a second step of adapting said initial language model with respect to and/or employing said purpose information, thereby generating an adapted language model to be used as said language model.

A basic idea of the first solution therefore is to perform a language model generation by a process of corpus adaptation.

A basic idea of the second solution is to perform a model adaptation by using an initial language model generation first and then incorporating the purpose information on the level of the language model.

Although the above given key ideas separately lead to independent solutions of the founding object of the present invention, these key ideas may be combined so as to end up with an even better method for generating and/ or adapting language models for continuously spoken speech recognition purposes in which a given training corpus is adapted with respect to the given purpose information and in which a then generated language model is also adapted with respect to the purpose information characterizing the characteristics, the vocabulary and/or the like of the given continuously spoken speech recognition purpose under use.

The combination of both inventive key ideas leads to an even better recognition result and to an even more reliable language model for continuously spoken speech recognition purposes.

Said Purpose information may comprise vocabulary and may therefore contain basic words like verbs, nouns and/or the like. It can also contain semantic class information, names, entities and/or the like.

E.g. in the case of an dialog system for a travelling guide in Germany, city names like Paris does not exist in the vocabulary but semantic class name "City" may exists. In this case, all occurences of "Paris" in the text corpus can first be modified, converted or mapped to "City" and the language model can then be generated from the resulting adapted or modified corpus.

LM modeling using class information is referred as class-based language modeling. The resulting language model will contains n-grams like "fly to City" instead of "fly to Paris". The probability estimation of class members of "City", e.g. Stuttgart, Berlin, is out of the scope of current invention. However, the proposed inventive methods can be combined with class-based language modeling to further improve language model and hence the recognizer performance.

Usually purpose information is predefined by the spoken dialogue module designer based on the underlying application domain.

According to a particular embodiment of the inventive methods it is of advantage to use texts of newspapers, books, internet sources, and/or the like at least as parts of said training corpus and/or of said initial training corpus. According to this measure, large amount of possible texts which are freely available can be involved and evaluated for the generation and adaptation of language models, thereby increasing and refining the probability measures for the recognition process.

According to a further embodiment of the inventive methods for generating and/or adapting language models it is suggested in the step of adapting said initial training corpus to consider only those parts or segments of said initial training corpus as parts or segments of said adapted training corpus which only contain elements of the vocabulary according to said purpose information. In other words, according to this preferred embodiment of the inventive method any segments or parts of the initial training corpus is neglected and/or avoided, if it contains vocabulary in the out-of-vocabulary range of the respective system or purpose which is fixed and excluded by the purpose information of the continuously spoken speech recognition purpose. Said parts or segments may be referred to as parts or segments of the training corpus and the underlying text to a given degree or level of refinement. Therefore, sentences, subsentences, word sequences, phrases, subphrases or the like may be referred to as parts or segments of the training corpus or the initial training corpus in the sense of the invention.

According to a further preferred embodiment of the inventive methods in the step of generating and/or including a priori probabilities on spoken word sequences the frequency of occurrences of all word n-grams are determined with respect to said training corpus based on n-gram counts.

In other words: Given the text or texts of the training corpus or the initial training corpus n-gram structures are built up and the occurrences of word sequences containing n words are counted. From the distribution of the counts for every word sequence of n words the specific probabilities can be calculated as the fraction of the counts for given n word sequence and the count of all n word sequences in the training corpus and the initial training corpus respectively.

The process of N-gram modeling models the frequency of occurences of word sequences. It assumes that the occurrence of a word depends only on the preceding n-1 words. Neither words with a distance more than n nor the semantic contexts are taken into consideration. Given a word sequence

$$W = w_1 w_2 ... w_L$$

according to the concept of n-gram modeling, its probability can be estimated as

$$P(W) = \prod_{i=1}^{L} P(w_i \mid w_{i-n+1} ... w_{i-1})$$

wherein all probability components on the right hand side of above equation can be estimated as

$$P(w_i \mid w_{i-n+1} ... w_{i-1}) = \frac{COUNT(w_{i-n+1} ... w_{i-1} w_i)}{COUNT(w_{i-n+1} ... w_{i-1})} = \frac{COUNT(w_{i-n+1} ... w_{i-1} w_i)}{\sum_{k=1}^{N} COUNT(w_{i-n+1} ... w_{i-1} w_k)}$$

where the function COUNT defines the number of occurrences of the respective word sequences in the training corpus and the right hand side of above equation can be referred to as a relative n-gram frequency.

However, if

$$w_{i-n+1} ... w_{i-1} w_i$$

does not exists in the training corpus, according to above equation

$$P(w_i \mid w_{i-n+1}...w_{i-1}) = 0$$

This is not desirable and will cause recognition errors. To guarantee non-zero probability estimate, smoothing methods are employed. Smoothing can be carried out by interpolating the relative n-gram frequency with relative (n-1)-gram frequency and/or relative (n-2)-gram frequency, or other methods like discounting etc. Smoothing are well known techniques to model the probabilities of unseen events/ word sequence. It is not covered by the current invention methods proposed in this patent application. However, the inventions can be combined with smoothing techniques to further improve the recognizer performance.

It is of particular advantage to use in the step of adapting said initial language model only those word n-grams which only contain elements of the vocabulary according to said purpose information to obtain said a priori probability based on socalled pruned word n-gram counts. In this case the whole text corpus may be used to define an initial language model. Then the n-gram structure is rebuilt and the probabilities are recounted under the restriction that n-grams of the n-gram structure are avoided and neglected in which any word of the out-of-vocabulary range defined by the purpose information is contained.

To further increase the recognition rate the training corpus may be used which contains and/or covers domains, themes, and/or the like according to the purpose information. Here text can be used which have something to do with the original recognition purpose. For instance, in the case of an dialog system for a travelling guide a text base might be useful which deal with geographic entities such as countries, cities, locations, streets and/or the like, and it makes hardly sense to include other texts covering other domains or themes.

To further increase the recognition rate and the reliability of such a system it is according to a further preferred embodiment of the inventive methods possibly to combine the step of adapting said initial language model combined with other adaptation processes, e.g. topic detection, in domain setence selection and/or the like.

It is a further aspect of the present invention to provide a method for recognizing speech wherein the method for generating and/or adapting language models is incorporated.

Additionally, it is a further aspect of the present invention to provide a system, an apparatus, a device, and/or the like for generating and/or for adapting language models for continuously spoken speech recognition purposes, and/or for recognizing speech which is in each case capable for performing and/or realizing the inventive method for generating and/or adapting language models, the method for recognizing speech and/or the steps thereof.

According to a further aspect of the present invention a computer program product is provided, comprising computer program means which is adapted to perform and/or to realize the inventive method for generating and/or for adapting language models, the inventive method for recognizing speech and/or the steps thereof, when it is executed on a computer, a digital signal processing means and/or the like.

The abovementioned and further aspects of the present invention will become more elucidated taking into account the following remarks: In continuous speech recognition, a language model provides an a priori estimation of the probability of a spoken word sequence to improve the recognition accuracy. The word sequence probabilities prob are usually determined by counting their frequency count of occurrence from large amounts of texts, e. g. newspaper. Such language model however do not perform well for spoken dialogue systems. Domain specific language models trained by manually collected or artificially generated texts, on the other hand, do not provide reliable word sequence probabilities as the amount of texts are usually small.

In order to utilize the existing large corpus such as newspaper or internet resources to provide better probability estimation, the invention proposes a language model adaptation method based on the vocabulary of the underlying system. The method estimates the a priori probability of a word sequence from its frequency of occurrence in segments of word sequences that only contain words existing in the vocabulary of the system.

The invention also or alternatively proposes a word n-gram pruning method to carry out the adaptation on the word n-gram statistics level. The frequency counts of all existing word n-grams are first computed. Any word n-grams that contain out-of-vocabulary words are pruned away. n-gram probabilities are then directly estimated from the resulting pruned word n-gram counts.

Language modelling techniques, in particular statistical n-gram language modelling is stateoftheart in the field. N-gram language modelling assumes that the a priori probability of a spoken word sequence can be estimated by counting its frequency of occurrence in a large collection of texts. It further assumes that the occurrence of a word depends only on the preceeding n-1 words.

Also a count cut-off method can be involved in which word n-grams with frequency of occurrence of less than a predefined threshold are removed from the language model to reduce the size of the language model.

Domain adaptation methods such as topic detection are known. In topic detection, only articles that are determined to be in the same domain of application are used for training language models.

In continuous speech recognition, language models provide an a priori estimation of the probability of a spoken word sequence to improve the recognition accuracy. State-of-the-art statistical n-gram modelling, models the frequency of the occurrence of word sequences. It assumes that the occurrence of a word depends only on the proceeding n-1 words. The n-gram probabilities are usually estimated by taking statistics on a large collection of written texts such as newspaper articles or texts from the Internet.

It is widely believed that n-gram language models trained from such text sources are not appropriate for spoken dialogue application systems. There are two main arguments for this. First, it is doubted that n-gram language models trained on newspaper texts do reflect the characteristics of the spontaneous speech used in a real dialogue system. Second, such language models usually assign a large probability mass to words that are out-of-vocabulary (OOV), as the vocabulary of the spoken dialogue system is much smaller than the vocabulary of the written texts. A speech recognizer without an internal mechanism to handle the OOV-situation usually cannot recognize speech utterances properly when using a language model with such a high OOV probability mass.

For many existing dialogue systems, text data collected manually or generated artificially are used to train language models. However, manually collected or artificially generated data are usually small and hence insufficient to train adequate language models.

The invention proposes to adapt language models from a large collection of written texts to the underlying spoken dialogue application systems by utilizing the vocabulary of the system. It proposes, a text corpus adaptation technique in which the adapted corpus is only formed of sentence segments that consist of at least n continuous words that are in the vocabulary. The adapted text corpus is then used to train language models. The resulting language models can then be interpolated with language models trained from manually collected or/ and artificially collected texts to improve the performance of the speech recognizer.

The invention also proposes a method, a word n-gram pruning to realize/implement the adaptation idea. The word n-gram pruning technique operates on the word n-gram count level instead of corpus level. In word n-gram pruning, all word n-gram frequency counts from the original text corpus are computed. Then, any word n-grams that contain out-of-vocabulary (OOV) words are pruned away. N-gram probabilities are then directly computed from the pruned word n-gram frequency counts. The probability of unknowns or the likelihood of seeing an OOV word in the testing set can be set to values that are appropriate to the application if an open vocabulary is required. For example, the probability of an OOV can be set as equal to the likelihood of words that appear once in the pruned word n-gram list. Hence, word n-gram pruning can be also viewed as a method to redistribute the probability mass of unknown n-grams to known n-grams.

The invention proposes a domain adaptation method for language modelling. Word n-gram pruning allows language models trained from a large text corpus with a large vocabulary size to be used in spoken dialogue application systems. It allows rapid adaptation to new applications with different vocabulary as the vocabulary is only required during the pruning stage and recounting of word n-gram from the corpus is not necessary. Also, this method can be applied to any text collections such as newspapers, Internet resources such as newsgroup posts, etc. It can also be combined with other language model adaptation techniques such as topic detection.

In the following the advantages and aspects of the present invention will be described taking reference to the accompanying Figures.

**Fig. 1** is a schematic block diagram describing a preferred embodiment of the method for generating and/or adapting language models.

**Fig. 2** is a schematic block diagram describing a further preferred embodiment of the inventive method for generating and/or adapting language models.

**Fig. 3** is a schematical block diagramm describing the concept of n-gram laguage model generation.

**Fig. 4** is a schematical block diagram describing the concept of language model adaptation by word n-gram pruning.

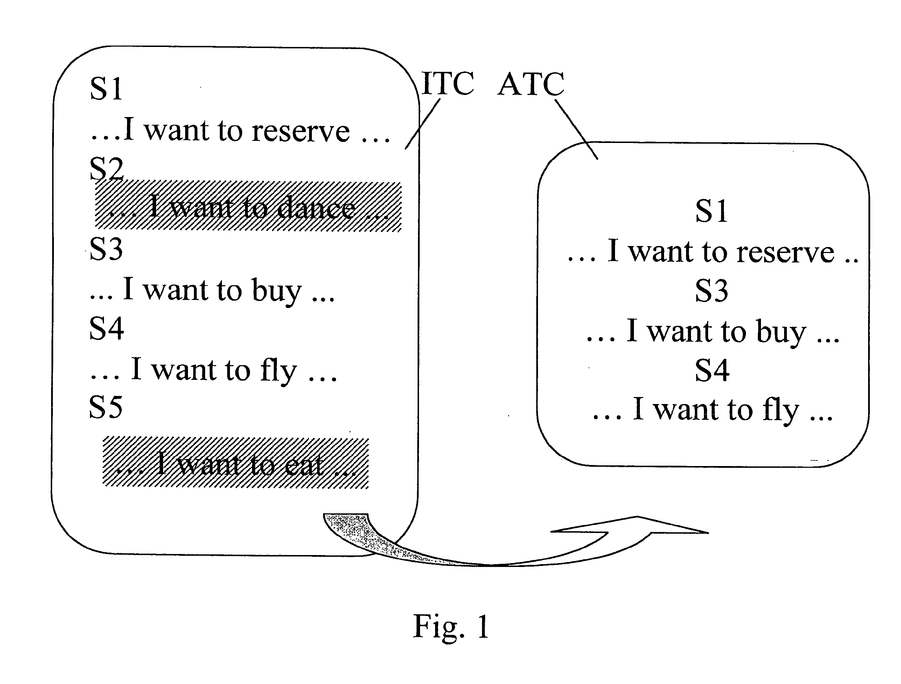

The schematic block diagram of Fig. 1 shows a first preferred embodiment of the inventive method for generating and/or for adapting language models for continuously spoken speech recognition purposes.

The embodiment of Fig. 1 describes the case where a set of texts is given building an initial training corpus ITC. The underlying purpose of the recognition system and therefore of the language models to be generated is the recognition of continuously spoken speech in the field of travelling guides. As can be seen from the structure of the initial training corpus ITC sentences or word sequences S1 to S5 are contained. The sequences S1, S3 and S4, namely "I want to reserve", "I want to buy", and "I want to fly" deal with the situation of travelling or the like. In contrast, sequences S2 and S5, namely "I want to dance", "I want to eat" deal with situations which are not typical for travelling or the like.

Before generating the particular language models the sequences S2 and S5, which are not typical for travelling situations, are removed from the initial training corpus ITC to arrive at an adapted training corpus ATC, which only contains the adequate sequences S1, S3, and S4 to generate and train the travelling specific language models.

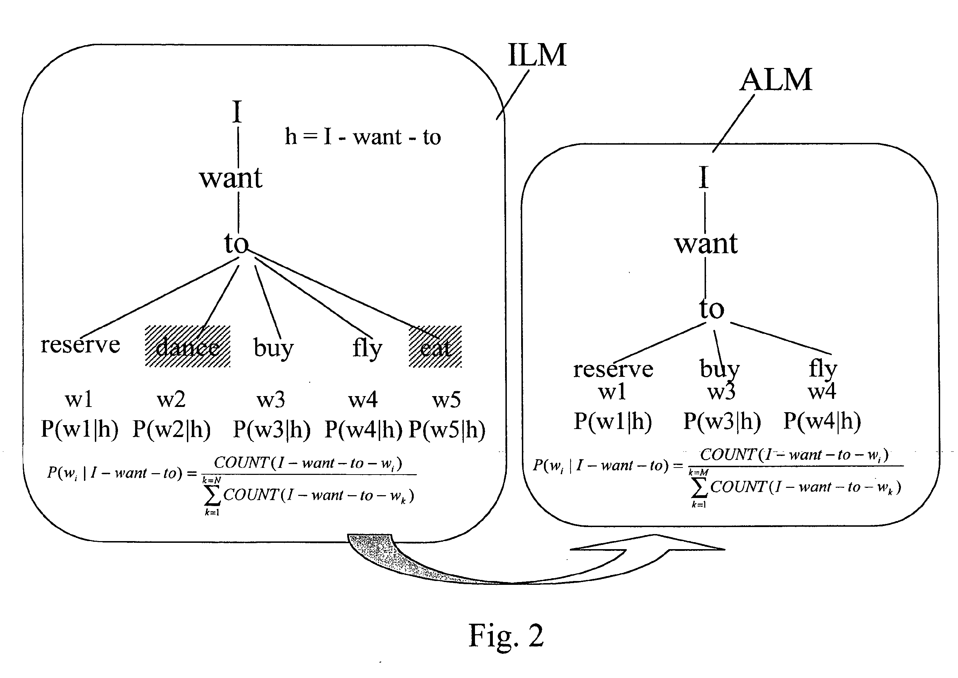

Fig. 2 illustrates another embodiment of the inventive method for generating and/or adapting language models for continuously spoken speech recognition purposes.

In this embodiment an initial language model ILM is given which is represented by a tree-structure on which an evaluation according to n-grams is performed. The underlying word sequences S1 to S5 are the same as in the case of the embodiment of Fig. 1. As these sequences S1 to S5 are comparable with respect to the first three words "I want to" they belong to the same root and branch away after the word "to". So the sequences S1 to S5 have the general structure Sj = hwj, with j = 1, ..., 5 and with h = "I want to" and w1 = "reserve", w2 = "dance", w3 = "buy", w4 = "fly", and w5 = "eat".

For each of the sequences S1 to S5 the a priori probability prob(Sj) may be defined by:

$$prob(Sj) := count(Sj) / \sum_{k=1}^{k=N} count(Sk)$$

wherein Sj and Sk, respectively, denote the respective word sequences S1 to S5, wherein "prob" defines the probability function, and wherein "count" defines the number of occurrences of the respective word sequence in the underlying text or training corpus TC.

With the definitions given above we also have for the value of prob(Sj):

$$prob(Sj) := P(wj \mid I-want-to) = \frac{COUNT(I-want-to-wj)}{\sum_{k=1}^{k=N} COUNT(I-want-to-wk)}$$

As the word sequences S2 and S5 are not related to a travelling situation, the respective branches or n-grams of the initial language model ILM are denoted by a hatching. The model adaptation is carried out by pruning those n-grams S2 and S5, which are not related to the travelling situation, which therefore contain out-of-vocabulary words and which therefore are hatched in the depicted initial language model ILM of Fig. 2.

Accordingly in the transition to the adapted language model ALM of the right hand side of Fig. 2 the respective branches or n-grams for word sequences S2, S5 are removed so that only the n-grams for sequences S1, S3, and S4 remain.

The evaluation formula for the a priori probabilities prob(Sj) remains the same, but the counting index k for the initial mode ILM running from 1 to N now runs from 1 to M < N for the adapted, thereby decreasing the out-of-vocabulary probability of the n-gram structure or model.

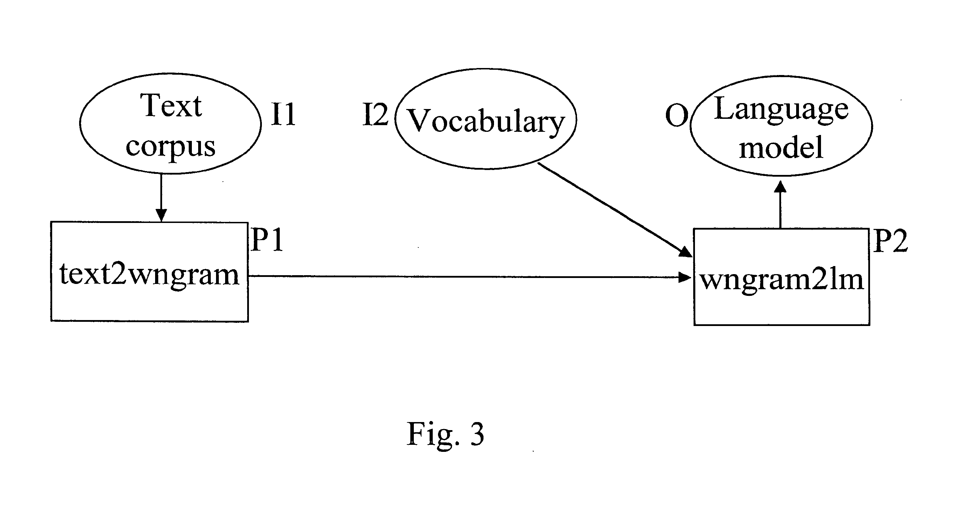

Fig. 3 is a schematical block diagram elucidating the general concept of n-gram language model generation. A text corpus is given as a training corpus a supplied as a first input I1 to a first process P1 of text to word n-gram conversion "text2wngram". In a following second process P2 of word n-gram to language model generation "wngram21m" given system or application vocabulary as a second input I2 a language model is generated as an output O.

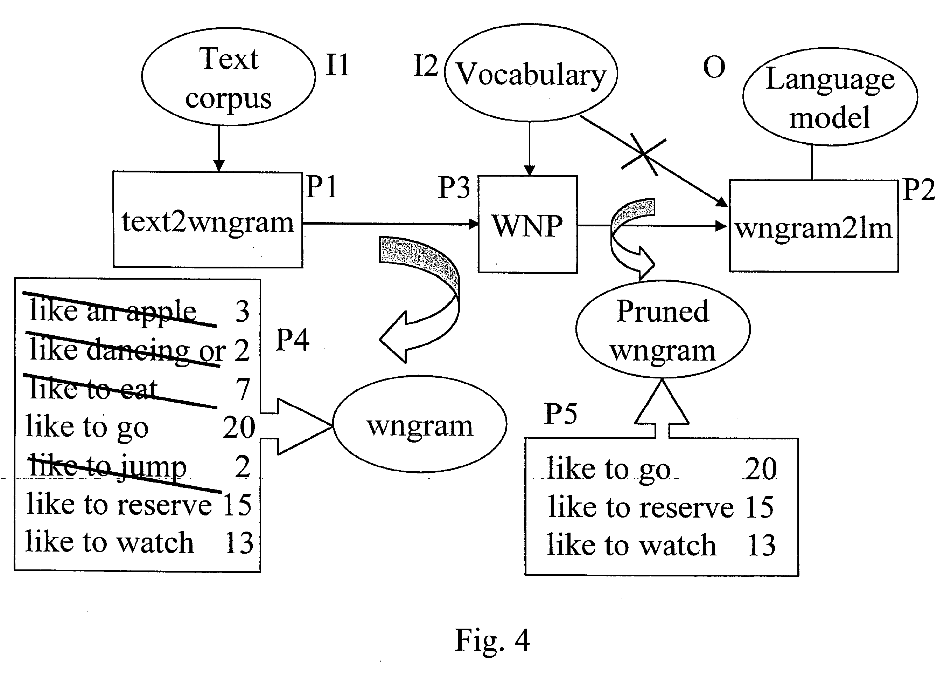

Fig. 4 is a schematical block diagram elucidating the inventive concept of language model generation/adaptation by word n-gram pruning. Again, as a first Input I1 a text corpus is supplied to a first process of P1 of text to word n-gram conversion "text2wngram". At the end of the whole procedure again in a process P2 of word n-gram to language model generation "wngram2lm" a language model is generated as an output O. In contrast to prior art methods, an intermediate process P3 of word n-gram pruning WNP is performed right before the process P2 of word n-gram to language model generation "wngram2lm". Here, the application or system vocabulary is needed and supplied as a second input 12.

Within the process P3 of word n-gram pruning "WNP" OOV word sequences are detected in a first sub-process P4 but keeping the complete word n-gram structure. In a following sub-process P5 the OOV word n-grams are cancelled and the in-vocabulary word n-grams are kept in the word n-gram strucure to end up with a pruned word n-gram structure.

**Claims**

1. Method for generating and/or adapting language models for continuously spoken speech recognition purposes, comprising the steps of:

 - providing purpose information (PI), describing characteristics, vocabulary, and/or the like of the given continuously spoken speech recognition purpose, providing a training corpus (TC) in the form of an amount of texts, and

- generating a language model (LM) for said continuously spoken speech recognition purpose based on and employing said training corpus (TC) and/or a derivative thereof and thereby generating and/or including a priori information and/or probabilities on spoken word sequences,

wherein the step of providing a training corpus (TC) comprises the steps of:

- first providing an initial training corpus (ITC), and
- second adapting said initial training corpus (ITC) with respect to and/or employing said purpose information (PI), thereby generating an adapted training corpus (ATC) to be used as said training corpus (TC).

2. Method according to claim 1,
   wherein the step of generating said language model (LM) comprises steps of:

   - first generating an initial language model (ILM) based on said training corpus (TC) and/or a derivative thereof and
   - second adapting said initial language model (ILM) with respect to and/or employing said purpose information (PI), thereby generating an adapted language model (ALM) to be used as said language model (LM).

3. Method for generating and/or adapting language models for continuously spoken speech recognition purposes, comprising the steps of:

   - providing purpose information (PI), describing characteristics, vocabulary, and/or the like of the given continuously spoken speech recognition purpose, providing a training corpus (TC) in the form of an amount of texts, and
   - generating a language model (LM) for said continuously spoken speech recognition purpose based on and employing said training corpus (TC) and/or a derivative thereof and thereby generating and/or including a priori information and/or probabilities on spoken word sequences,

   wherein the step of generating said language model (LM) comprises steps of:

   - first generating an initial language model (ILM) based on said training corpus (TC) and/or a derivative thereof and
   - second adapting said initial language model (ILM) with respect to and/or employing said purpose information (PI), thereby generating an adapted language model (ALM) to be used as said language model (LM).

4. Method according to claim 3,
   wherein the step of providing a training corpus (TC) comprises the steps of:

   - first providing an initial training corpus (ITC), and
   - second adapting said initial training corpus (ITC) with respect to and/or employing said purpose information (PI), thereby generating an adapted training corpus (ATC) to be used as said training corpus (TC).

5. Method according to any one of the proceeding claims,
   wherein texts of newspapers, books, internet sources, and/or the like and/or a derivative thereof are used at least as parts of said training corpus (TC) and/or of said initial training corpus (ITC).

6. Method according to any one of the proceeding claims,
   wherein in the step of adapting said initial training corpus (ITC) only parts or segments of said initial training corpus (ITC) are considered as parts or segments of said adapted training corpus (ATC) that only contain elements of the vocabulary according to said purpose information (PI).

7. Method according to any one of the proceeding claims,
   wherein in the step of generating and/or including a priori probabilities on spoken word sequences the frequency of occurrences of all word n-grams are determined with respect to said training corpus (TC) based on n-gram counts.

**8.** Method according to claim 7,
wherein in the step of adapting said initial language model (ILM) only word n-grams are considered that only contain elements of the vocabulary according to said purpose information (PI) to obtain said a priori probabilities based on pruned word n-gram counts.

**9.** Method according to any one of the proceeding claims,
wherein a training corpus (TC) is used containing or covering domains, themes, and/or the like according to said purpose information (PI).

**10.** Method according to any one of the proceeding claims,
wherein the step of adapting said initial language model (ILM) is combined with other adaptation processes or techniques, e.g. topic detection, in domain sentence selection, and/or the like.

**11.** Method for recognizing speech,
wherein a method of generating and/or adapting language models according to any one of the claims 1 to 10 is employed.

**12.** System for generating and/or adapting language models and/or for recognizing speech which is capable of performing and/or realizing the method for generating and/or adapting language models according to any one of the claims 1 to 10 and/or the steps thereof and/or the method for recognizing speech according to claim 11 and/or the steps thereof.

**13.** Computer program product, comprising computer program means, adapted to perform and/or to realize the method for generating and/or adapting language models according to any one of the claims 1 to 10, and/or the steps thereof, and/or the method for recognizing speech according to claim 11 and/ or the steps thereof, when it is executed on a computer, to a signal processing means and/or the like.

S1
…I want to reserve …
S2
… I want to dance …
S3
... I want to buy ...
S4
… I want to fly …
S5
… I want to eat …

ITC   ATC

S1
… I want to reserve ..
S3
… I want to buy ...
S4
… I want to fly ...

Fig. 1

EP 1 320 086 A1

EP 1 320 086 A1

ILM

ALM

I

want

to

h = I - want - to

reserve    dance    buy    fly    eat

w1     w2     w3     w4     w5

P(w1|h) P(w2|h) P(w3|h) P(w4|h) P(w5|h)

$$P(w_i \mid I - want - to) = \frac{COUNT(I - want - to - w_i)}{\sum_{k=1}^{k=N} COUNT(I - want - to - w_k)}$$

I

want

to

reserve    buy    fly

w1     w3     w4

P(w1|h)   P(w3|h)   P(w4|h)

$$P(w_i \mid I - want - to) = \frac{COUNT(I - want - to - w_i)}{\sum_{k=1}^{k=M} COUNT(I - want - to - w_k)}$$

Fig. 2

EP 1 320 086 A1

Text corpus  I1     I2 ( Vocabulary )     O ( Language model )

| P1 | | | P2 |

text2wngram

wngram2lm

Fig. 3

Text corpus  I1

I2 Vocabulary

O  Language model

P1 text2wngram

P3 WNP

P2 wngram2lm

P4

like an apple    3
like dancing or  2
like to eat      7
like to go       20
like to jump     2
like to reserve  15
like to watch    13

wngram

Pruned wngram

P5

like to go        20
like to reserve   15
like to watch     13

Fig. 4

**European Patent Office**

## EUROPEAN SEARCH REPORT

**Application Number**

EP 01 12 9721

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KLAKOW, DIETRICH: "Selecting Articles from the Language Model Training Corpus" ICASSP 2000, 'Online! 2000, pages 1695-1698, XP002193700 Retrieved from the Internet: <URL:ieeexplore.ieee.org> 'retrieved on 2002-03-20! | 1,2,7, 9-13 | G10L15/18 G10L15/26 |
| Y | * the whole document * | 8 | |
| X | US 6 188 976 B1 (GOPALAKRISHNAN PONANI S ET AL) 13 February 2001 (2001-02-13) * abstract * * column 2, line 1 - line 15; figures 1,2,5 * * column 3, line 14 - line 63 * * column 6, line 8 - line 63; claim 1 * | 3-7,9-13 | |
| Y | GAO ET. AL.: "N-gram Distribution Based Language Model Adaptation" ICSLP 2000, 'Online! 2000, XP002193701 Retrieved from the Internet: <URL:research.microsoft.com/{jfgao/paper/icslp00-1.pdf > 'retrieved on 2002-03-20! * abstract * | 8 | TECHNICAL FIELDS SEARCHED (Int.Cl.7) G10L |
| A | * paragraph '0001! * | 1,3,12, 13 | |

-/--

The present search report has been drawn up for all claims

| Place of search | Date of completion of the search | Examiner |
|---|---|---|
| MUNICH | 20 March 2002 | De Vos, L |

| | European Patent Office | **EUROPEAN SEARCH REPORT** | Application Number EP 01 12 9721 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHEN S F ET AL: "Topic adaptation for language modeling using unnormalized exponential models" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, 12 May 1998 (1998-05-12), pages 681-684, XP010279335 ISBN: 0-7803-4428-6 * abstract * | 1-13 | |
| A | US 6 157 912 A (PETERS JOCHEN ET AL) 5 December 2000 (2000-12-05) * abstract; claim 1 * | 1,3, 11-13 | |

TECHNICAL FIELDS SEARCHED (Int.Cl.7)

The present search report has been drawn up for all claims

| Place of search | Date of completion of the search | Examiner |
|---|---|---|
| MUNICH | 20 March 2002 | De Vos, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 12 9721

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2002

| Patent document cited in search report | Publication date | Patent family member(s) | Publication date |
|---|---|---|---|
| US 6188976 B1 | 13-02-2001 | NONE | |
| US 6157912 A | 05-12-2000 | DE 19708183 A1<br>EP 0862161 A2<br>JP 10240288 A | 03-09-1998<br>02-09-1998<br>11-09-1998 |

For more details about this annex : see Official Journal of the European Patent Office, No. 12/82